# EUROPÄISCHE PATENTSCHRIFT

(11) **EP 2 311 601 B1**
(45) Veröffentlichungstag und Bekanntmachung des Hinweises auf die Patenterteilung: **08.08.2012**
(21) Anmeldenummer: 10008409.4
(22) Anmeldetag: 12.08.2010
(51) Int. Cl.: B24B 3/36, A01F 29/09, A01D 43/08

(54) **Verfahren und Vorrichtung zur Erkennung der Schneidschärfe von Häckselmessern eines Feldhäckslers**
Method and device for detecting the sharpness of cutter blades on a chaff cutter
Procédé et dispositif de reconnaissance du tranchant de hache-pailles d'une récolteuse-hacheuse

(30) Priorität: 13.10.2009 DE 102009049265
(43) Veröffentlichungstag der Anmeldung: 20.04.2011
(73) Patentinhaber: CLAAS Saulgau GmbH, 88348 Bad Saulgau (DE)
(72) Erfinder: Loebe, Stefan, 88348 Bad Saulgau (DE)

(56) Entgegenhaltungen:
- EP-A1- 1 386 534
- EP-A2- 1 522 214

## Beschreibung

Die Erfindung betrifft ein Verfahren und eine Vorrichtung zur Erkennung der Schneidschärfe von Häckselmessern eines Feldhäckslers gemäß dem Oberbegriff des unabhängigen Anspruchs 1.

### Stand der Technik

Bekannt sind Feldhäcksler mit Häckselaggregaten, deren umlaufend angetriebene Häckselmesser mit einer feststehenden Gegenschneide zusammenwirkend eine Schneidvorrichtung zum Zerkleinern eines Gutstroms, der den Häckselmessern zwangsweise zugeführt wird, bilden. Dabei nimmt die Schärfe der Häckselmesser mit zunehmender Betriebsdauer ab, so dass infolge dessen die Schnittkraft an der Schneide der Häckselmesser zunimmt und damit auch zugleich das erforderliche Antriebsdrehmoment an der Häckseltrommel, welches einem zunehmenden Energieverbrauch des Antriebsmotors gleich kommt. Um diesen Anstieg immer wieder zu stoppen, verfügen die Häckselaggregate über eine Messerschleifeinrichtung, die in zeitlichen Abständen dann zum Einsatz kommt, wenn der Fahrer des Häckselaggregates den Steuerbefehl dazu gibt. Eine zuverlässige Aussage über die momentane Schärfe der Häckselmesser liegt dem Fahrer dabei nicht vor, so dass seine Entscheidung über die Auslösung des Steuerbefehls einer subjektiven Wahrnehmung, gestützt insbesondere auf akustische Wahrnehmungen beruhend, obliegt.

### Aufgabenstellung

Hier setzt die Aufgabe der Erfindung an mit dem Ziel, dem Fahrer eine zuverlässigere Entscheidungsgrundlage für seine Entscheidung zur Auslösung des Steuerbefehls zum Nachschleifen der Häckselmesser an die Hand zu geben.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung beschreibt ein Verfahren zur Schneidschärfeerkennung der Häckselmesser eines Feldhäckslers mit umlaufend angetriebenen Häckselmessern. Indem den Häckselmessern im laufenden Betrieb oder bei einer definierten Drehzahl im Leerlaufbetrieb ein Referenzwerkstoff zum Zerschneiden zugeführt wird, und dessen Schnittwiderstand eine vergleichende Aussage über den momentanen Zustand der Schärfe der Häckselmesser ermöglicht, bietet das Verfahren dem Fahrer eine Möglichkeit an, eine Entscheidungsgrundlage zu liefern dafür, wann der Schleifmechanismus zum Nachschleifen der Häckselmesser in Gang gesetzt werden sollte, um die ursprüngliche volle Messerschärfe wieder herbeizuführen.

Der Vergleich bezieht sich darauf, dass dem Erfassungssystem der Schneidschärfeerkennung ein hinterlegter Referenzwert zugrunde liegt, der optimale Schärfe der Häckselmesser repräsentiert, wobei die Abweichung von diesem Referenzwert einen Abstandswert darstellt, welcher ein Signal generiert, welches dazu genutzt werden kann, dem Fahrer ein optisches und/oder akustisches Signal zur Verfügung zu stellen, welches ihn dazu veranlasst, den Schleifvorgang in Gang zu setzen.

Erfindungsgemäß kann der Referenzwerkstoff aus einem biologisch abbaubaren Werkstoff bestehen, der entweder flexibel, beispielsweise aus einem fadenförmigen Material, oder auch aus einem steifen, beispielsweise platten- oder stabförmigen Material, besteht.

Als Referenzwert kann in einem nichtflüchtigen Speicher eines µ-Prozessors ein physikalisches und digitalisiertes Signal hinterlegt sein, welches die Schnittkraft als Reaktionskraft an der Stützanlage, bzw. dem Stützlager des Referenzwerkstoffs bei voller Messerschärfe, repräsentiert. Mit abnehmender Schärfe der Häckselmesser nimmt die Schnittkraft als Aktionskraft zu und damit auch deren Reaktionskraft, welche auf das Stützlager des Referenzwerkstoffs einwirkt. Diese Stützkraft kann beispielsweise mit einem Sensor, ausgebildet als Piezoelement, messtechnisch erfasst und damit in ein elektrisches Signal als Spannungswert umgewandelt und digitalisiert werden. Die Beträge beider Signale, der des Referenzwertes und der des Momentanwerts, können somit in einem direkten Vergleich miteinander ausgewertet werden.

Die Messung muss nicht kontinuierlich durchgeführt werden, sondern sie kann auch getaktet sein, beispielsweise zeitabhängig oder auch abhängig von der Anzahl der Umdrehungen der Häckseltrommel. Dabei ist es auch möglich die Messwerte zu Clustern, um daraus einen Mittelwert zu errechnen, und dieses über mehrere Cluster hinweg, um somit aus einer vorgegebenen Anzahl von Mittelwerten der jeweiligen Cluster einen Mittelwert der Mittelwerte zu errechnen. Dieser Mittelwert der Mittelwerte wird nach vorgegebener Taktung mit dem Referenzwert verglichen, um daraus die besagte Information dem Fahrer zur Verfügung zu stellen. Dieses Auswerteverfahren stellt somit einen Algorithmus zur Errechnung eines vergleichenden Momentanwertes dar.

Auf dieser Basis kann somit der Zustand der Schärfe mittels der Schnittkraft als Reaktionskraft an der Stützanlage des Referenzwerkstoffs messtechnisch erfasst und ausgewertet werden.

Alternativ ist es auch möglich, beispielsweise die Zugkraft als Reaktionskraft innerhalb eines Referenzwerkstoffs messtechnisch zu erfassen und nach vorgenanntem Algorithmus auszuwerten.

Ebenso ist es auch möglich, beispielsweise ein Drehmoment als Reaktionsmoment an einem Zuführungselement zur Heranführung des Referenzwerkstoffs an die Häckselmesser der Häckseltrommel messtechnisch zu erfassen und nach vorgenanntem Algorithmus auszuwerten.

Erfindungsgemäß kann der Referenzwerkstoff auch aus einem Gasstrahl, beispielsweise aus einem Luftstrahl, oder einem Flüssigkeitsstrahl bestehen, der aus einer Düse mit hoher Geschwindigkeit austritt und unter einem vorbestimmten Winkel auf die Schneidkanten der Häckselmesser gelenkt wird, welches ein Luftschallspektrum erzeugt und welches auf akustischer Basis messtechnisch erfasst wird und mit einem Referenzwert nach vorgegebenen Algorithmus verglichen wird.

Somit kann das Frequenzspektrum der Pulsation des zerplatzenden Gas- oder Flüssigkeitsstrahls auf der Basis einer Spektralanalyse ausgewertet werden, um aus der Auswertung der Spektralanalyse ein Signal zu generieren, welches dem Fahrer eine Information derart liefert, dass die Schneidschärfe einen unteren Grenzwert erreicht hat, wodurch ihm mitgeteilt wird, dass ein Nachschleifen der Häckselmesser angezeigt ist.

Das Ergebnis der Auswertung kann am Fahrerplatz in einem Anzeigeinstrument, beispielsweise im Display der Benutzerstation, visualisiert dargestellt werden, wobei dieses beispielsweise auch als akustisches Signal ausgegeben werden kann.

In einer weiteren Ausgestaltung der Erfindung kann das Signal als gespeicherter Messwert auch derart verwendet werden, dass am Ende eines Häckselzyklus der Schleifvorgang automatisch in Gang gesetzt wird.

### Ausführungsbeispiel

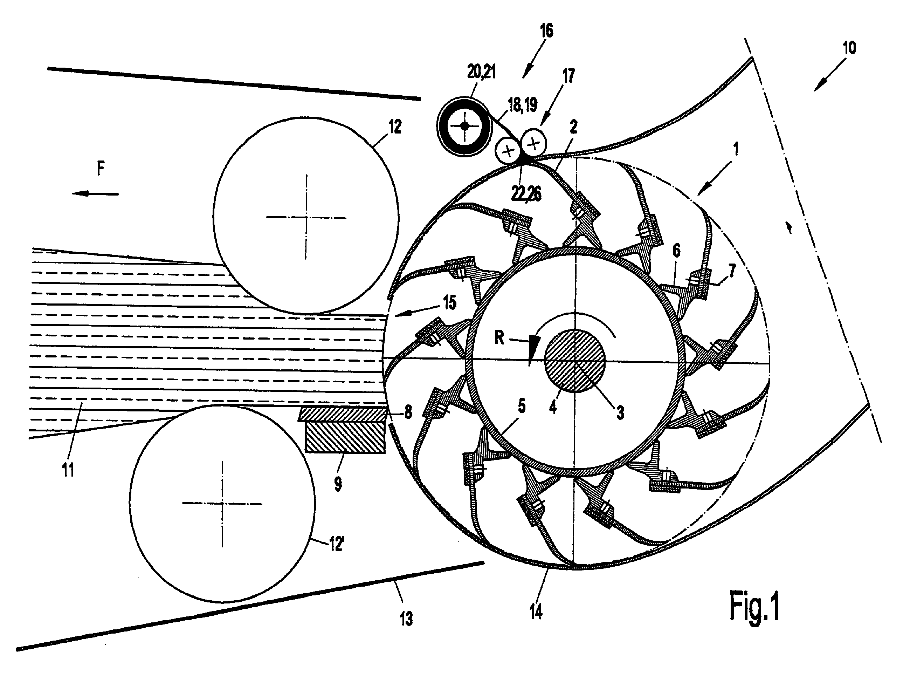

In den Figurendarstellungen Fig.1 bis Fig.3 ist die Erfindung mit Ihren wesentlichen Merkmalen dargestellt und ist nachfolgend beschrieben.

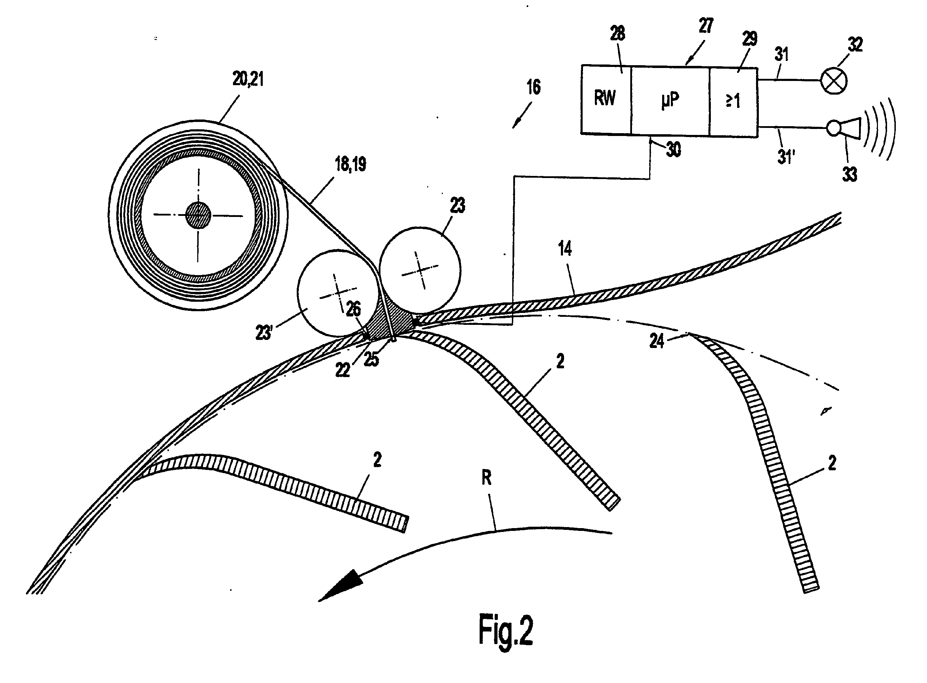

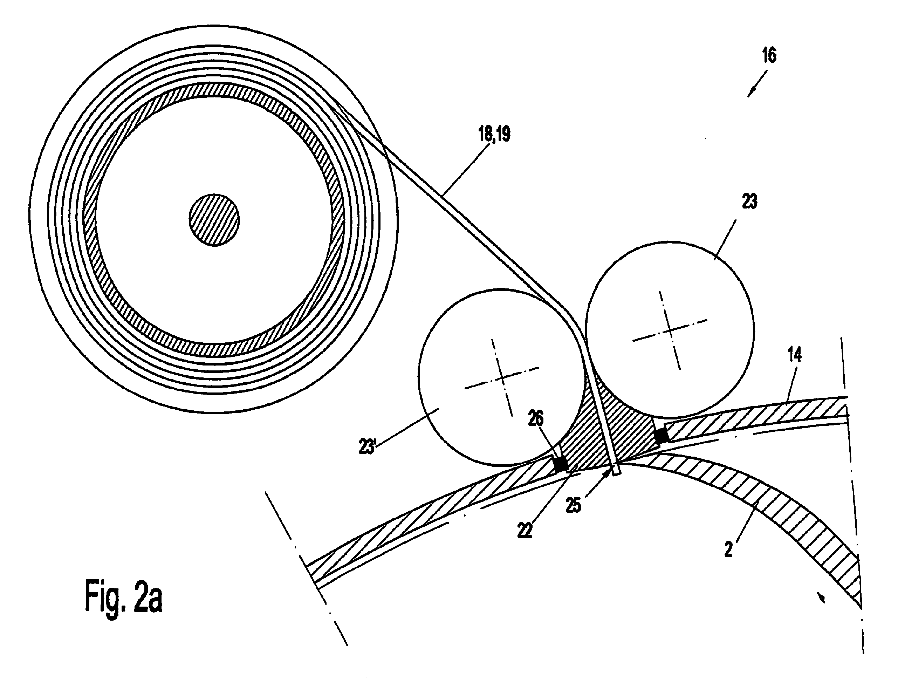

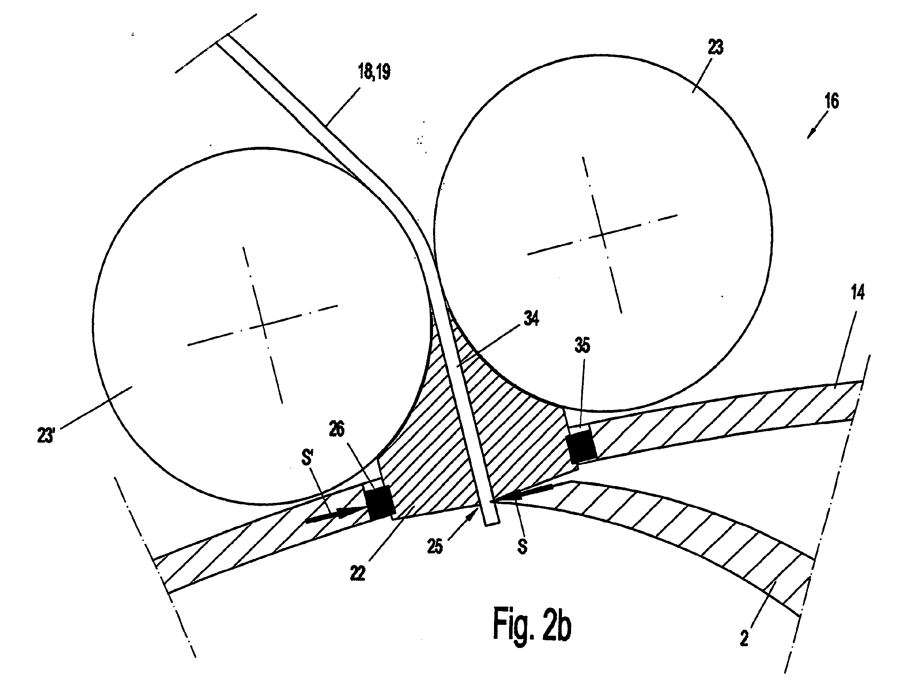

Fig. 1 zeigt einen Schnitt durch ein Häckselaggregat 10 in Fahrtrichtung F des Feldhäckslers verlaufend und Fig.2 zeigt einen vergrößerten Auszug aus Fig.1. Der Aufbau und die Funktionsweise derartiger Häckselaggregate von selbstfahrenden Feldhäckslern sind dem Fachmann bekannt, so dass eine ausführliche Darstellung aller Details an dieser Stelle entbehrlich ist.

Die Häckseltrommel 1 ist mit Häckselmessern 2 eines Häckselaggregats 10 eines Feldhäckslers, dessen Rotationsachse 3 sich quer zur Fahrtrichtung F erstreckt. Die Häckselmesser 2 werden von Messerträgern 6, die mit dem drehfest mit der Antriebswelle 4 verbundenen Trommelmantel 5 verschweist sind, mittels einer Verschraubung 7 aufgenommen. Der Rotationspfeil R gibt die Drehrichtung der Häckseltrommel 1 an. Der Messertrommel vorgelagert ist die feststehende Schneide 8, die sich auf einer Unterlage 9 am nicht mit dargestellten Maschinengestell des Häckselaggregats 10 abstützt. Der Häckseltrommel 1 vorgelagert ist das Einzugsgehäuse 13 für den Einzug des aus stängeligem Erntegut bestehenden und zu häckselnden Gutstroms 11, wobei die Förderung des Gutstroms 11 in Richtung der umlaufend angetriebenen Häckseltrommel 1 von den Einzugs und Vorpresswalzen 12,12' bewirkt wird. Die Häckseltrommel 1 ist gelagert in einem Häckslergehäuse 14, wobei der Gutstrom 11 durch die Eintrittsöffnung 15 an die Häckselmesser 2 herangeführt wird.

Erfindungsgemäß ist das Häckselaggregat 10 bzw. die Häckslereinheit 10 mit einer Schneidschärfeerkennungseinrichtung 16 ausgestattet. Diese besteht in diesem Ausführungsbeispiel aus einer Zuführeinrichtung 17 für einen Referenzwerkstoff 18, der aus einem biologisch abbaubaren fadenförmigen Material 19 besteht. Da dieser Referenzwerkstoff 18 in das zu häckselnde Erntegut hineingelangt, muss dieses zugleich für den Verdauungstrakt der Tiere, denen das Erntegut als Nahrungsbasis dient, unschädlich sein.

Der Referenzwerkstoff 18, ausgebildet als fadenförmiges Material 19 wird auf einer Vorratsrolle 20, ausgebildet als Rollenspindel 21, bevorratet und während des laufenden Häckselprozesses von dieser abgerollt und einem Mundstück 22 zugeführt. Der Referenzwerkstoff 18,19 wird zwischen den Zuführrollen 23,23' eingelegt und von diesen in Richtung des Mundstücks 22 weiter transportiert.

Das Mundstück 22 ist von einer Bohrung durchsetzt, durch die der fadenförmige Referenzwerkstoff 18,19 hindurchgeführt und den Schneidkanten 24 der Häckselmesser 2 zugeführt wird. Die Zuführrollen 23,23' werden von einem elektrisch betriebenen Schrittmotor angetrieben, so dass der Referenzwerkstoff 18,19 in vorgegebenen Intervallen in den Schneidbereich der Schneidkanten 24 der Häckselmesser 2 eindringt. Das Mundstück 22 stellt somit zugleich die Stützanlage für den Referenzwerkstoff 18 dar.

Der Scheidspalt 25 zwischen den Schneidkanten 24 der Häckselmesser 2 und dem Mundstück 22 ist sehr gering und tendiert gegen Null mm, so dass der Faden 19 als Referenzwerkstoff 18, sofern er in den Bereich der Schneidkanten 24 eindringt, diesen einen Schnittkraftwiderstand S entgegensetzt. Der Schnittkraftwiderstand wird von dem Mundstück 22 als Stützkraftwiderstand S' aufgenommen, wobei diese Stützkraft beispielsweise mittels eines Piezoelementes als Sensor 26 messtechnisch bzw. sensorisch erfasst wird, welches als Eingangsignal 30 an der Auswerteinheit (Summierer) 29 anliegt und mit dem in einem nichtflüchtigen Speicher 28 eines µ-Prozessors 27 hinterlegten Referenzwert (RW) als Kenngröße für scharfe Messer verglichen wird. Übersteigt die Differenz der Abweichung von diesem Referenzwert einen vordefinierten Wert, so generiert der µ-Prozessors 27 ein Ausgangssignal 31,31', welches dem Fahrer als visualisierte und/oder akustische Information mittels einer optischen und/oder akustischen Anzeige 32,33 mitgeteilt wird, so dass er bei nächster Gelegenheit den Prozess des Nachschleifens der Häckselmesser 2 auslösen kann. Erfindungsgemäß ist es auch möglich, den Referenzwert RW nach jedem Schleifvorgang neu zu ermitteln und diesen dann in dem nichtflüchtigen Speicher 28 zu überschreiben und damit neu abzuspeichern.

Fig. 2a zeigt einen vergrößerten Ausschnitt aus Fig,2 und Fig. 2b zeigt einen vergrößerten Ausschnitt aus Fig,2a. Das Mundstück 22 als Aufnahme und Stützanlage für den Referenzwerkstoff 18 bzw. dem fadenförmigen Material 19 ist in dem Ausführungsbeispiel mit einer Durchgangsbohrung 34 ausgestattet, um die sich koaxial die äußere Kontur als kreisrunder Querschnitt des Mundstücks 22 formt. Auf dem äußeren Umfang des kreisrunden Querschnitts ist ein ringförmig ausgebildeter Sensor 26 passgenau aufgepresst, der sich zugleich axialverschiebbar aber ebenso passgenau und spielfrei in einer Aufnahmeöffnung 35 in der Wand des Häckslergehäuses 14 abstützt, so dass sich die Schnittkraftwiderstandskraft S, welche sich dem Häckselmesser entgegenstemmt, über den Sensor 26 als Reaktionskraft messtechnisch erfasst und detektiert wird.

Der Schneidspalt 25 zwischen Mundstück 22 und den Schneidkanten 24 kann automatisch nachgestellt werden, da sich die Häckselmesser 2 durch das Nachschleifen abnutzen und sich somit der Schneidspalt zwischen Mundstück (22) und Häckselmesser 2 vergrößert. Der Nachstellvorgang kann in an sich bekannter weise durch automatisches Entfernen des Mundstücks 22 von den umlaufenden Häckselmessern 2 und anschließender automatischer Annäherung des Mundstücks 22 an die Scheidkanten 24 herbeigeführt werden. Zur Abgleichung dieses Vorgangs kann ein separater Sensor, beispielsweise auch als Piezoelement oder alternativ auch der gleiche Sensor 26, welcher den Schnittkraftwiderstand S während des Häcksels detektiert, verwendet werden.

### Bezugszeichenliste

- 1: Häckseltrommel
- 2: Häckselmesser
- 3: Rotationsachse
- 4: Antriebswelle
- 5: Trommelmantel
- 6: Messerträger
- 7: Verschraubung
- 8: feststehende Schneide
- 9: Unterlage
- 10: Häckselaggregat, Häckslereinheit
- 11: Gutstrom
- 12,12': Vorpresswalzen
- 13: Einzugsgehäuse
- 14: Häckslergehäuse
- 15: Eintrittsöffnung
- 16: Schneidschärfeerkennungseinrichtung
- 17: Zuführeinrichtung
- 18: Referenzwerkstoff
- 19: fadenförmiges Material
- 20: Vorratsrolle
- 21: Rollenspindel
- 22: Mundstück, Stützanlage
- 23,23': Zuführrollen
- 24: Schneidkante
- 25: Schneidspalt
- 26: Sensor
- 27: µ-Prozessor
- 28: nichtflüchtiger Speicher
- 29: Auswerteinheit, Summierer
- 30: Eingangssignal
- 31,31': Ausgangssignal
- 32: optische Anzeige
- 33: akustische Anzeige
- 34: Durchgangsbohrung
- 35: Aufnahmeöffnung

- F: Fahrtrichtung
- R: Drehrichtung, Rotationspfeil
- S: Schnittkraftwiderstand
- S': Stützkraftwiderstand
- RW: Referenzwertes

## Patentansprüche

1. Verfahren zur Schneidschärfeerkennung der Häckselmesser eines Feldhäckslers mit umlaufend angetriebenen Häckselmessern, **dadurch gekennzeichnet, dass** den Häckselmessern (2) ein Referenzwerkstoff (18) zum Zerschneiden zugeführt wird, der eine vergleichende Aussage über den momentanen Zustand der Schärfe der Häckselmesser (2) ermöglicht.

2. Verfahren nach Anspruch 1, **dadurch gekennzeichnet, dass** der Häckseltrommel bei einer definierten Drehzahl im Leerlaufbetrieb ein Referenzwerkstoff (18) zum Zerschneiden zugeführt wird, der eine vergleichende Aussage über den momentanen Zustand der Schärfe der Häckselmesser (2) ermöglicht

3. Verfahren nach Anspruch 1, **dadurch gekennzeichnet, dass** der Referenzwerkstoff (18) aus einem biologisch abbaubaren Werkstoff besteht.

4. Verfahren nach Anspruch 3, **dadurch gekennzeichnet, dass** der biologisch abbaubare Werkstoff aus einem flexiblen fadenförmigen Material (19) besteht.

5. Verfahren nach Anspruch 3, **dadurch gekennzeichnet, dass** der biologisch abbaubare Werkstoff (18) aus einem steifen platten- oder stabförmigen Material besteht.

6. Verfahren nach Anspruch 1 oder 2, **dadurch gekennzeichnet, dass** der momentane Schnittkraftwiderstand (S') des Referenzwerkstoffs (18) sensorisch erfasst und als Eingangssignal (30) einem µ-Prozessor (27) zwecks Vergleich mit einem Referenzwert (RW) zugeführt wird.

7. Verfahren nach Anspruch 6, **dadurch gekennzeichnet, dass** der momentane Schnittkraftwiderstand (S') indirekt mittels der Zugkraft als Reaktionskraft innerhalb eines Referenzwerkstoffs (18) messtechnisch erfasst und ausgewertet wird.

8. Verfahren nach Anspruch 6, **dadurch gekennzeichnet, dass** der momentane Schnittkraftwiderstand (S') indirekt mittels eines Drehmoments als Reaktionsmoment an einer Zuführeinrichtung (17) des Referenzwerkstoffs (18) messtechnisch erfasst und ausgewertet wird.

9. Verfahren nach Anspruch 1 oder 2, **dadurch gekennzeichnet, dass** der Referenzwerkstoff (18) aus einem Gas- oder Flüssigkeitsstrahl besteht.

10. Verfahren nach Anspruch 9, **dadurch gekennzeichnet, dass** das Frequenzspektrum der Pulsation des Gas- oder Flüssigkeitsstrahls auf der Basis einer Spektralanalyse sensorisch ausgewertet wird.

11. Verfahren nach Anspruch 1 oder 2, **dadurch gekennzeichnet, dass** der µ-Prozessor (27) als Ergebnis des Vergleichs mit einem Referenzwert (RW) wenigstens ein Ausgangssignal (31,31') generiert, auf dessen Basis der Zustand der Schärfe der Häckselmesser als Ergebnis der sensorischen Erfassung und Auswertung am Fahrerplatz angezeigt wird.

12. Verfahren nach Anspruch 11, **dadurch gekennzeichnet, dass** der Zustand der Schärfe am Fahrerplatz durch eine optische und/oder akustische Anzeige (32,33) angezeigt wird.

13. Vorrichtung zur Anwendung des Verfahrens zur Schneidschärfeerkennung der Häckselmesser eines Feldhäckslers mit umlaufend angetriebenen Häckselmessern, **dadurch gekennzeichnet, dass** den Häckselmessern (2) eine Scheidschärfeerkennungseinrichtung (16) zugeordnet ist, welche den Häckselmessern (2) einen Referenzwerkstoff (18) zum Zerscheiden zuführt.

14. Vorrichtung nach Anspruch 13, **dadurch gekennzeichnet, dass** der Häckseltrommel bei einer definierten Drehzahl im Leerlaufbetrieb ein Referenzwerkstoff (18) zum Zerschneiden zugeführt wird, und dessen Schnittwiderstand eine Aussage über den momentanen Zustand der Schärfe der Häckselmesser (2) ermöglicht

15. Vorrichtung nach Anspruch 13 oder 14, **dadurch gekennzeichnet, dass** Scheidschärfeerkennungseinrichtung (16) ein Zuführeinrichtung zum Einführen des Referenzwerkstoff (18) in den Scheidbereich der Häckselmessern (2) umfasst.

16. Vorrichtung nach Anspruch 13 oder 14, **dadurch gekennzeichnet, dass** die Schneidschärfeerkennungseinrichtung (16) eine Sensor (26) zur messtechnischen Erfassung und Detektierung der Schnittkraftwiderstandskraft (S) relativ zum Referenzwerkstoff (18) umfasst.

17. Vorrichtung nach Anspruch 13 oder 14, **dadurch gekennzeichnet, dass** die Schneidschärfeerkennungseinrichtung (16) einen µ-Prozessor (27) als Auswerteinheit (29) umfasst.

18. Vorrichtung nach Anspruch 16, **dadurch gekennzeichnet, dass** der µ-Prozessor einen nichtflüchtigen Speicher (28) zum Hinterlegen eines Referenzwertes (RW) umfasst.

19. Vorrichtung nach Anspruch 16, **dadurch gekennzeichnet, dass** der µ-Prozessor einen Vergleich mit dem Referenzwert (RW) und dem tatsächlichen Schnittkraftwiderstand (S') durchführt.

20. Vorrichtung nach Anspruch 16, **dadurch gekennzeichnet, dass** der µ-Prozessor ein Ausgangssignal zur Erkennung der Schneidschärfe für den Fahrer in der Fahrerkabine generiert.

21. Vorrichtung nach Anspruch 13 oder 14, **dadurch gekennzeichnet, dass** die Schneidschärfeerkennungseinrichtung (16) eine optische und/oder akustische Anzeige (32,33) als Zustandsanzeige für die Scheidschärfeerkennung umfasst

## Claims

1. A method of detecting cutting sharpness of the chopping blades of a forage harvester with chopping blades which are driven in rotation, **characterised in that** a reference material (18) is fed to the chopping blades (2) for being cut up, which reference material permits comparative information about the current state of the sharpness of the chopping blades (2).

2. A method according to claim 1 **characterised in that** a reference material (18) for cutting up is fed to the chopping drum at a defined rotary speed in the idle mode of operation, which reference material permits comparative information about the current state of the sharpness of the chopping blades (2).

3. A method according to claim 1 **characterised in that** the reference material (18) comprises a biodegradable material.

4. A method according to claim 3 **characterised in that** the biodegradable material comprises a flexible filamentary material (19).

5. A method according to claim 3 **characterised in that** the biodegradable material (19) comprises a stiff material in plate or bar form.

6. A method according to claim 1 or claim 2 **characterised in that** the current cutting force resistance (S') of the reference material (18) is detected by sensor means and passed as an input signal (30) to a µ-processor (27) for the purposes of comparison with a reference value (RW).

7. A method according to claim 6 **characterised in that** the current cutting force resistance (S') is detected with measurement technology indirectly by means of the tensile force as a reaction force within a reference material (18) and evaluated.

8. A method according to claim 6 **characterised in that** the current cutting force resistance (S') is detected with measurement technology indirectly by means of a torque as a reaction moment at a feed device (17) of the reference material (18) and evaluated.

9. A method according to claim 1 or claim 2 **characterised in that** the reference material (18) comprises a gas or liquid jet.

10. A method according to claim 9 **characterised in that** the frequency spectrum of the pulsation of the gas or liquid jet is evaluated by sensor means on the basis of spectral analysis.

11. A method according to claim 1 or claim 2 **characterised in that** the µ-processor (27) generates as the result of the comparison with a reference value (RW) at least one output signal (31, 31'), on the basis of which the state of sharpness of the chopping blades is displayed as the result of sensor detection and evaluation at the driver's seat.

12. A method according to claim 11 **characterised in that** the state of sharpness is displayed at the driver's seat by an optical and/or acoustic display (32, 33).

13. Apparatus for carrying out the method of cutting sharpness detection of the chopping blades of a forage harvester with chopping blades which are driven in rotation, **characterised in that** associated with the chopping blades (2) is a cutting sharpness detection device (16) which feeds a reference material (18) for cutting up to the chopping blades (2).

14. Apparatus according to claim 13 **characterised in that** a reference material (18) for cutting up is fed to the chopping drum at a defined rotary speed in the idle mode of operation, and its cutting resistance permits information about the current state of the sharpness of the chopping blades (2).

15. Apparatus according to claim 13 or claim 14 **characterised in that** the cutting sharpness detection device (16) includes a feed device for introducing the reference material (18) into the cutting region of the chopping blades (2).

16. Apparatus according to claim 13 or claim 14 **characterised in that** the cutting sharpness detection device (16) includes a sensor (26) for measuringly detecting and determining the cutting force resistance force (S) relative to the reference material (18).

17. Apparatus according to claim 13 or claim 14 **characterised in that** the cutting sharpness detection device (16) includes a processor (27) as an evaluation unit (29).

18. Apparatus according to claim 16 **characterised in that** the µ-processor includes a non-volatile memory (28) for storing a reference value (RW).

19. Apparatus according to claim 16 **characterised in that** the µ-processor carries out a comparison with the reference value (RW) and the actual cutting force resistance (S').

20. Apparatus according to claim 16 **characterised in that** the µ-processor generates an output signal for detection of the cutting sharpness for the driver in the driving cab.

21. Apparatus according to claim 13 or claim 14 **characterised in that** the cutting sharpness detection device (16) includes an optical and/or acoustic display (32, 33) as a state display for cutting sharpness detection.

## Revendications

1. Procédé de détection du tranchant des couteaux de hachage d'une ensileuse dotée de couteaux de hachage entraînés en rotation, **caractérisé en ce qu'**un matériau de référence (18) à couper, qui permet une évaluation comparative de l'état momentané du tranchant des couteaux de hachage (2), est amené aux couteaux de hachage (2).

2. Procédé selon la revendication 1, **caractérisé en ce qu'**un matériau de référence (18) à couper, qui permet une évaluation comparative de l'état momentané du tranchant des couteaux de hachage (2), est amené au tambour de hachage à une vitesse de rotation définie en fonctionnement à vide.

3. Procédé selon la revendication 1, **caractérisé en ce que** le matériau de référence (18) est composé d'un matériau biodégradable.

4. Procédé selon la revendication 3, **caractérisé en ce que** le matériau biodégradable est composé d'un matériau souple en forme de fil (19).

5. Procédé selon la revendication 3, **caractérisé en ce que** le matériau biodégradable (18) est composé d'un matériau rigide en forme de plaque ou de barre.

6. Procédé selon la revendication 1 ou 2, **caractérisé en ce que** la résistance à la coupe momentanée (S') du matériau de référence (18) est saisie par capteur et amenée en tant que signal d'entrée (30) à un microprocesseur (27) aux fins de comparaison avec une valeur de référence (RW).

7. Procédé selon la revendication 6, **caractérisé en ce que** la résistance à la coupe momentanée (S') est saisie indirectement par technique de mesure au moyen de la force de traction en tant que force de réaction à l'intérieur d'un matériau de référence (18) et évaluée.

8. Procédé selon la revendication 6, **caractérisé en ce que** la résistance à la coupe momentanée (S') est saisie indirectement par technique de mesure au moyen d'un couple en tant que couple de réaction sur un dispositif d'amenée (17) du matériau de référence (18) et évaluée.

9. Procédé selon la revendication 1 ou 2, **caractérisé en ce que** le matériau de référence (18) est composé d'un jet de gaz ou de liquide.

10. Procédé selon la revendication 9, **caractérisé en ce que** le spectre de fréquences de la pulsation du jet de gaz ou de liquide est évalué par capteur sur la base d'une analyse spectrale.

11. Procédé selon la revendication 1 ou 2, **caractérisé en ce que** le microprocesseur (27) génère, en tant que résultat de la comparaison avec une valeur de référence (RW), au moins un signal de sortie (31, 31') sur la base duquel l'état du tranchant des couteaux de hachage est indiqué au poste de conduite en tant que résultat de la saisie et de l'évaluation par capteur.

12. Procédé selon la revendication 11, **caractérisé en ce que** l'état du tranchant est indiqué au poste de conduite par une indication optique et/ou acoustique (32, 33).

13. Dispositif d'application du procédé de détection du tranchant des couteaux de hachage d'une ensileuse dotée de couteaux de hachage entraînés en rotation, **caractérisé en ce qu'**un dispositif de détection du tranchant (16) est associé aux couteaux de hachage (2), lequel amène un matériau de référence (18) à couper aux couteaux de hachage (2).

14. Dispositif selon la revendication 13, **caractérisé en ce qu'**un matériau de référence (18) à couper est amené au tambour de hachage à une vitesse de rotation définie en fonctionnement à vide, la résistance à la coupe dudit matériau de référence permettant d'évaluer l'état momentané du tranchant des couteaux de hachage (2).

15. Dispositif selon la revendication 13 ou 14, **caractérisé en ce que** le dispositif de détection du tranchant (16) comprend un dispositif d'amenée pour introduire le matériau de référence (18) dans la zone de coupe des couteaux de hachage (2).

16. Dispositif selon la revendication 13 ou 14, **caractérisé en ce que** le dispositif de détection du tranchant (16) comprend un capteur (26) pour la saisie par technique de mesure et la détection de la résistance à la coupe (S) par rapport au matériau de référence (18).

17. Dispositif selon la revendication 13 ou 14, **caractérisé en ce que** le dispositif de détection du tranchant (16) comprend un microprocesseur (27) en tant qu'unité d'évaluation (29).

18. Dispositif selon la revendication 16, **caractérisé en ce que** le microprocesseur comprend une mémoire non volatile (28) pour stocker une valeur de référence (RW) .

19. Dispositif selon la revendication 16, **caractérisé en ce que** le microprocesseur effectue une comparaison entre la valeur de référence (RW) et la résistance à la coupe effective (S').

20. Dispositif selon la revendication 16, **caractérisé en ce que** le microprocesseur génère un signal de sortie de détection du tranchant pour le conducteur dans la cabine de conduite.

21. Dispositif selon la revendication 13 ou 14, **caractérisé en ce que** le dispositif de détection du tranchant (16) comprend une indication optique et/ou acoustique (32, 33) comme indication d'état pour la détection du tranchant.
